# EUROPEAN PATENT APPLICATION

(11) **EP 4 614 581 A1**
(43) Date of publication of application: **10.09.2025**
(21) Application number: 22965417.3
(22) Date of filing: 14.11.2022
(51) Int. Cl.: H01M 4/13, H01M 50/46, H01M 10/058

(54) **ELECTRODE SHEET, ELECTRODE ASSEMBLY, BATTERY CELL, BATTERY AND ELECTRICAL DEVICE**

(71) Applicant: Contemporary Amperex Technology (Hong Kong) Limited, Central (HK)
(72) Inventor: XU, Hu, Ningde, Fujian 352100 (CN); JIN, Haizu, Ningde, Fujian 352100 (CN); NIU, Shaojun, Ningde, Fujian 352100 (CN); ZHAO, Fenggang, Ningde, Fujian 352100 (CN); ZENG, Yuqun, Ningde, Fujian 352100 (CN)
(74) Representative: Ziebig Hengelhaupt Intellectual Property Attorneys Patentanwaltskanzlei PartGmbB
(86) International application number: PCT/CN2022/131740
(87) International publication number: WO 2024/103224

(57) **Abstract**

Provided in the present application are an electrode plate, an electrode assembly, a battery cell, a battery and an electrical device, relating to the field of batteries. The electrode plate comprises a current collector, an active material layer and a functional layer, the active material layer being provided on a surface of the current collector. The active material layer comprises a main body area and a thinned area, the thinned area being arranged at the end of the main body area in a first direction, and the thickness of the main body area being greater than the thickness of the thinned area. **In** the first direction, the current collector is provided with a tab part that extends beyond the thinned area in a direction facing away from the main body area. The functional layer is arranged on the surface of the thinned area facing away from the current collector, and the functional layer is configured to allow an electrolyte to pass through. The thinned area of the active material layer of the electrode plate is provided with the functional layer that allows the electrolyte to pass through, such that after the electrode plate is wound or stacked to form an electrode assembly, a gap between the functional layer and the separator is small, thus helping to exhibit the capillary action, and enabling the electrolyte to pass through the functional layer to quickly infiltrate the thinned area. Therefore, the thinned area can function, thereby helping to increase the energy density of the battery cell.

## Description

### TECHNICAL FIELD

The present application relates to the field of batteries, and specifically relates to an electrode plate, an electrode assembly, a battery cell, a battery, and an electrical device.

### BACKGROUND

Batteries are very widely used in the field of new energy, such as electric vehicles or new energy vehicles. New energy vehicles and electric vehicles have become a new development trend in the automobile industry. For the development of battery technologies, various design factors should be considered, such as cycle life, discharge capacity, charging-discharging rate, and other performance parameters. In addition, energy density of the batteries should also be considered. However, at present, battery cells have low energy density.

### SUMMARY OF THE INVENTION

An object of embodiments of the present application is to provide an electrode plate, an electrode assembly, a battery cell, a battery, and an electrical device, which are intended to improve the problem of low energy density of batteries in a relevant technology.

In a first aspect, an embodiment of the present application provides an electrode plate, comprising: a current collector; an active material layer, and a functional layer, wherein the active material layer is arranged on a surface of the current collector, the active material layer comprises a main body region and a thinned region, the thinned region is arranged at one end of the main body region along a first direction, thickness of the main body region is larger than thickness of the thinned region, and along the first direction, the current collector has a tab portion extending beyond the thinned region in a direction away from the main body region; and the functional layer is provided on a surface of the thinned region facing away from the current collector and is configured to allow an electrolyte solution to pass through.

In the above technical solutions, the electrode plate is provided with the functional layer that allows the electrolyte solution to pass through on the thinned region of the active material layer, such that after the electrode plate is winded or stacked to form an electrode assembly, there is a small gap between the functional layer and the separator, which is conducive to capillary effect functioning, so that the electrolyte solution can quickly infiltrate the thinned region through the functional layer, and the thinned region can function, which is conductive to improving the energy density of the battery cell. In addition, the small gap provides a short path for lithium ion transmission, which can reduce the risk of lithium plating and improve the performance of the battery cell.

As an optional technical solution of an embodiment of the present application, the functional layer has a stronger ability to store the electrolyte solution than the active material layer.

In the above technical solutions, the functional layer has the stronger ability to store the electrolyte solution than the active material layer, so that the electrolyte solution tends to be stored in the functional layer, and lithium ions can enter the separator or the thinned region through the electrolyte solution stored in the functional layer, which can reduce the risk of lithium plating and improve the energy density of the battery cell.

As an optional technical solution of an embodiment of the present application, the functional layer comprises at least one of vinylidene fluoride polymer, hexafluoropropylene polymer, vinylidene fluoride-hexafluoropropylene polymer, polyacrylic acid, polystyrene-butadiene copolymer, polyvinyl alcohol, polyalkenoate, polyurethane, chlorinated rubber, and epoxy resin.

In the above technical solutions, the vinylidene fluoride polymer, hexafluoropropylene polymer, vinylidene fluoride-hexafluoropropylene polymer, polyacrylic acid, polystyrene-butadiene copolymer, polyvinyl alcohol, polyalkenoate, polyurethane, chlorinated rubber, and epoxy resin all have good ability to store the electrolyte solution. In particular, the vinylidene fluoride polymer, hexafluoropropylene polymer, and vinylidene fluoride-hexafluoropropylene polymer not only have strong ability to store the electrolyte solution, but also can be easily manufactured.

As an optional technical solution of an embodiment of the present application, the functional layer further comprises a conductive agent.

In the above technical solutions, the conductive agent is added to the functional layer, to enhance the conductivity of the functional layer, so that it is easy to transport the lithium ions.

As an optional technical solution of an embodiment of the present application, the conductive agent includes at least one of acetylene black, active carbon, carbon black, conductive graphite, and carbon nanotubes.

In the above technical solutions, the acetylene black, active carbon, carbon black, conductive graphite, and carbon nanotubes have good conductive effects, particularly acetylene black, which not only has good conductive effects but also is inexpensive.

As an optional technical solution of an embodiment of the present disclosure, the electrode plate is a negative electrode plate, the functional layer comprises an active material, powder particles with particle size larger than D₁ account for 50% of volume distribution of the active material in the functional layer, and powder particles with particle size larger than D₂ account for 50% of volume distribution of an active material in the active material layer, satisfying: 1≤D₂/D₁≤25.

In the above technical solutions, when D₂/D₁=1, the active material in the functional layer may be same as the active material in the active material layer, such that the functional layer not only can be conductive to the capillary effect functioning, enable the electrolyte solution to quickly infiltrate the thinned region through the functional layer, and enable the thinned region to function, but also can function similarly to the active material layer, which is conductive to improving the energy density of the battery cell. When 1<D₂/D₁≤25, the particle size of the powder particles of the active material in the functional layer is smaller than the particle size of the powder particles of the active material in the active material layer, such that particles in the functional layer are smaller than particles in the thinned region, and the electrolyte solution in the thinned region can hardly be discharged. Therefore, the functional layer can have good liquid retention effects on the thinned region, so that the thinned region can function, which is conductive to improving the energy density of the battery cell. In addition, the particles in the functional layer are smaller than the particles in the thinned region, and will have better kinematic performance, so that the functional layer in this region has a higher lithium plating window, thereby reducing the risk of lithium plating, and contributing to ensuring the performance of the battery cell.

As an optional technical solution of an embodiment of the present application, 1.01≤D₂/D₁≤5.

In the above technical solutions, when 1.01≤D₁/D₂≤5, the functional layer has good liquid retention capacity, better kinematic performance, and a higher lithium plating window, so that lithium plating is less likely to occur, which is conducive to ensuring the performance of the battery cell.

As an optional technical solution of an embodiment of the present disclosure, the electrode plate is a positive electrode plate, the functional layer comprises an active material, powder particles with particle size larger than D₁ account for 50% of volume distribution of the active material in the functional layer, and powder particles with particle size larger than D₂ account for 50% of volume distribution of an active material in the active material layer, satisfying: 1≤D₁/D₂≤30.

In the above technical solutions, when D₁/D₂=1, the active material in the functional layer may be same as the active material in the active material layer, such that not only can the functional layer be conductive to the capillary effect functioning, enable the electrolyte solution to quickly infiltrate the thinned region through the functional layer, and enable the thinned region to function, but also the functional layer itself can function similarly to the active material layer, which is conductive to improving the energy density of the battery cell. When 1<D₁/D₂≤30, the particle size of the powder particles of the active material in the functional layer is larger than the particle size of the powder particles of the active material in the active material layer, such that particles in the functional layer are larger than particles in the thinned region and have greater resistance, thereby resulting in a slow release rate of lithium ions in the thinned region, and reducing lithium ions to be intercalated in the negative electrode plate per unit time, so that lithium plating is less likely to occur, which is conductive to ensuring the performance of the battery cell.

As an optional technical solution of an embodiment of the present application, 1.01≤D₁/D₂≤10.

In the above technical solutions, when 1.01≤D₁/D₂≤10, not only can the effect of difficult lithium plating be achieved, but also the release rate of lithium ions will not be too slow, which is conducive to ensuring the discharge efficiency.

As an optional technical solution of an embodiment of the present application, the electrode plate is a negative electrode plate, the functional layer comprises an active material, gram capacity of the active material in the functional layer is M₁, and gram capacity of an active material in the active material layer is M₂, satisfying: 1.01≤M₁/M₂≤5.

In the above technical solutions, when 1.01≤M₁/M₂≤5, the gram capacity of the active material in the functional layer is larger than the gram capacity of the active material in the active material layer, thereby improving CB (Cell balance, which refers to a ratio of unit active capacity of the negative electrode plate to unit active capacity of the positive electrode plate) value of the electrode plate in a region where the functional region is located, and increasing space of the negative electrode plate for intercalation of lithium ions, so that lithium plating does not tend to occur, which is conductive to ensuring the performance of the battery cell.

As an optional technical solution of an embodiment of the present application, 1.01≤M₁/M₂≤1.3.

In the above technical solutions, 1.01≤M₁/M₂≤1.3 not only can increase the space of the negative electrode plate for intercalation of lithium ions, so that lithium plating does not tend to occur, but also will not enable the CB value to be too large, which will substantially increase the costs.

As an optional technical solution of an embodiment of the present application, the electrode plate is a positive electrode plate, the functional layer comprises an active material, gram capacity of the active material in the functional layer is M₁, and gram capacity of an active material in the main body region is M₂, satisfying: 0.3≤M₁/M₂≤1.01.

In the above technical solutions, when 0.3≤M₁/M₂<1, the gram capacity of the active material in the functional layer is smaller than the gram capacity of the active material in the active material layer, thereby improving the CB value of the electrode plate in the region where the functional region is located, so that a few lithium ions can be released from the positive electrode plate, and lithium plating does not tend to occur, which is conducive to ensuring the performance of the battery cell. When 1≤M₁/M₂≤1.01, the gram capacity of the active material in the functional layer is equal to or slightly larger than the gram capacity of the active material in the active material layer, such that not only can the functional layer be conductive to the capillary effect functioning, enable the electrolyte solution to quickly infiltrate the thinned region through the functional layer, and enable the thinned region to function, but also the functional layer itself can function similarly to the active material layer, which is conductive to improving the energy density of the battery cell.

As an optional technical solution of an embodiment of the present application, 0.5≤M₁/M₂≤1.01.

In the above technical solutions, when 0.5≤M₁/M₂≤1.01, the gram capacity of the active material in the functional layer is relatively large, and the functional layer itself can also function similarly to the active material layer, which is conductive to improving the energy density of the battery cell.

As an optional technical solution of an embodiment of the present application, along a thickness direction of the current collector, minimum thickness of the functional layer is h, satisfying: 1 µm≤h≤80 µm.

In the above technical solutions, the minimum thickness of the functional layer is limited to 1-80 µm, such that after the electrode plate is winded or stacked to form the electrode assembly, there is a small gap between the functional layer and the separator, which is conducive to the capillary effect functioning, and enables the electrode plate not to be too thick, so that the battery cell has high energy density. If h<1 µm, the functional layer has a small minimum thickness, which does not significantly improve the capillary effect. If h>80 µm, the functional layer has a large minimum thickness, which means that the overall functional layer is thick, enables the electrode plate to be thick, and may reduce the energy density of the battery cell.

As an optional technical solution of an embodiment of the present application, length of the functional layer in the first direction is L₁, and length of the thinned region in the first direction is L₂, satisfying: 0.8≤L₁/L₂≤1.5.

In the above technical solutions, the length of the functional layer in the first direction is 0.8-1.5 times as much as the length of the thinned region in the first direction. In this way, the functional layer can basically cover or completely cover the thinned region along the first direction, so that after the electrode plate is winded or stacked to form the electrode assembly, there is a small gap between the functional layer and the separator, which is conducive to the capillary effect functioning.

As an optional technical solution of an embodiment of the present application, along the thickness direction of the current collector, the functional layer has a first surface facing away from the current collector, a maximum distance between the first surface and the current collector is T₁, and thickness of the main body region is T₂, satisfying: 0.8≤T₁/T₂≤1.1.

In the above technical solutions, along the thickness direction, the maximum distance between the first surface and the current collector is 0.8-1.1 times as much as the thickness of the main body region. In this way, the first surface is basically aligned to a surface of the main body region facing away from the current collector, which is conducive to the capillary effect functioning, and enables the electrode plate not to be too thick, so that the battery cell has high energy density. If T₁<0.8T₂, after the electrode plate is winded or stacked to form the battery cell, there is a relatively large gap between the functional layer and the separator, and the electrolyte solution infiltrates the thinned region at a relatively slow infiltration speed. If T₁>1.1T₂, along a direction from the current collector to the active material layer, the functional layer extends a large distance beyond the surface of the main body region facing away from the current collector, and after the electrode plate is winded or stacked to form the battery cell, a gap between the main body region and the separator increases, so that the infiltration speed of the main body region becomes slow. In addition, the space occupied by the electrode plate increases, which further has the risk of reducing the energy density of the battery cell.

As an optional technical solution of an embodiment of the present application, 0.9≤T₁/T₂≤1.01.

In the above technical solutions, along the thickness direction, the maximum distance between the first surface and the current collector is 0.9-1.01 times as much as the thickness of the main body region. In this way, the first surface is basically aligned to the surface of the main body region facing away from the current collector, both the main body region and the thinned region can be quickly infiltrated, and the electrode plate will not be too thick, so that the battery cell has high energy density.

As an optional technical solution of an embodiment of the present application, the thinned region has a second surface, the functional layer is arranged on the second surface, and a distance between the second surface and the current collector in the thickness direction of the current collector gradually decreases along a direction from the main body region to the thinned region.

In the above technical solutions, along the direction from the main body region to the thinned region, the thickness of the thinned region gradually decreases. In this way, it is conductive to reducing stress at an interface between the active material layer and the tab portion.

As an optional technical solution of an embodiment of the present application, the second surface is an arc surface.

In the above technical solutions, the second surface is set as the arc surface, which is conductive to reducing stress concentration.

As an optional technical solution of an embodiment of the present application, the second surface intersects with the current collector at a first edge, and the functional layer clads the first edge.

In the above technical solutions, the functional layer clads the first edge, thereby reducing the risk that powder falls off in the thinned region.

As an optional technical solution of an embodiment of the present application, the functional layer covers a part of the tab portion.

In the above technical solutions, the functional layer covers a part of the tab portion, thereby reinforcing root portion of the tab portion, and reducing the risk of deformation and wrinkles in the root portion of the tab.

As an optional technical solution of an embodiment of the present application, along the first direction, the functional layer has a third surface facing way from the main body region, the third surface intersects with the current collector at a second edge, and a gap between the second edge and the first edge is L₃, satisfying: 0≤L₃≤5mm.

In the above technical solutions, along the first direction, the gap between the second edge and the first edge is 0-5 mm, so that the functional layer can have enough area for coating the tab portion and function to reinforce the root portion of the tab. Moreover, the functional layer will not affect length of the tab. If L₃>5 mm, the functional layer will have a large area for cladding the tab portion, thereby affecting molding of the tab.

As an optional technical solution of an embodiment of the present application, 1 mm≤L₃≤2 mm.

In the above technical solutions, along the first direction, the gap between the second edge and the first edge is 1-2 mm, so that the functional layer not only can have good reinforcing effects on the tab portion, but also does not tend to affect the molding of the tab.

As an optional technical solution of an embodiment of the present application, the functional layer has a first surface, a third surface, and a fourth surface, the fourth surface is in contact with the second surface, the first surface is parallel or aligned to the surface of the main body region facing away from the current collector along the thickness direction of the current collector, the first surface intersects with the fourth surface, the third surface connects the first surface to the fourth surface, and the third surface is perpendicular to the first surface.

In the above technical solutions, the third surface has a large length along the thickness direction. In this way, after the electrode plate is winded or stacked to form the electrode assembly, there is a small gap between the functional layer and the separator, which is conducive to the capillary effect functioning, enables the electrolyte solution to quickly infiltrate the thinned region through the functional layer, enables the thinned region to function, and is conductive to improving the energy density of the battery cell.

As an optional technical solution of an embodiment of the present application, the first surface is aligned to the surface of the main body region facing away from the current collector along the thickness direction of the current collector.

In the above technical solutions, the first surface is aligned to the surface of the main body region facing away from the current collector along the thickness direction. After the electrode plate is winded or stacked to form the electrode assembly, width of the gap between the main body region and the separator is equal to width of a gap between the first surface and the separator, thereby ensuring that the electrolyte solution quickly infiltrates the thinned region without increasing the thickness of the electrode plate, and greatly improving the energy density of the battery cell. This arrangement of the functional layer has ideal effects.

As an optional technical solution of an embodiment of the present application, the third surface intersects with the current collector.

In the above technical solutions, the third surface intersects with the current collector, indicating that the functional layer covers an edge of the thinned region in a direction from the main body region to the thinned region, and has good liquid retention effects.

As an optional technical solution of an embodiment of the present application, the functional layer has a first surface, a third surface, a fourth surface, and a fifth surface, the fourth surface is in contact with the second surface, the first surface is parallel or aligned to the surface of the main body region facing away from the current collector along the thickness direction of the current collector, the fifth surface is in contact with to the current collector, the third surface connects the fifth surface to the first surface, and the fourth surface connects the first surface to the fifth surface.

In the above technical solutions, since the functional layer may be formed after drying a fluid, when the functional layer is arranged in an ideal manner, the functional layer may flow to form the above shape. In this case, the functional layer also has good liquid retention effects, enables the thinned region to be quickly infiltrated, and enables the thinned region to function.

As an optional technical solution of an embodiment of the present application, the third surface is an arc surface.

In the above technical solutions, the third surface is set as the arc surface, which is conductive to reducing stress concentration.

As an optional technical solution of an embodiment of the present application, the active material layer is arranged on each of two opposite surfaces along the thickness direction of the current collector, and the functional layer is arranged in a thinned region of each of the active material layers.

In the above technical solutions, the active material layer is arranged on either side of the current collector, and the functional layer is arranged on the thinned region of each active material layer, so as to form the electrode assembly by winding or stacking the electrode plate.

In a second aspect, an embodiment of the present application further provides an electrode assembly, comprising the above electrode plate.

In a third aspect, an embodiment of the present application further provides a battery cell, comprising the above electrode assembly.

In a fourth aspect, an embodiment of the present application further provides a battery, comprising the above battery cell.

In a fifth aspect, an embodiment of the present application further provides an electrical device, comprising the above battery, wherein the battery is configured to provide electrical energy for the electrical device.

### Description of Drawings

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural diagram of a vehicle provided in some embodiments of the present application;
FIG. 2 is an exploded view of a battery provided in some embodiments of the present application;
FIG. 3 is an exploded view of a battery cell provided in some embodiments of the present application;
FIG. 4 is a schematic structural diagram of an electrode assembly provided in some embodiments of the present application;
FIG. 5 is a schematic structural diagram of an electrode plate provided in some embodiments of the present application;
FIG. 6 is a schematic structural diagram of an electrode plate provided in some other embodiments of the present application;
FIG. 7 is a schematic structural diagram of an electrode plate provided in still some other embodiments of the present application; and
FIG. 8 is a schematic structural diagram of an electrode plate provided in yet some other embodiments of the present application.

Icons: 10-box body; 11-first part; 12-second part; 20-battery cell; 21-end cover; 22-electrode assembly; 221-negative electrode plate; 222-positive electrode plate; 223-separator; 23-case; 24-electrode plate; 241-current collector; 2411-tab portion; 242 -active material layer; 2421-main body region; 2422-thinned region; 24221-second surface; 243-functional layer; 2431-first surface; 2432-third surface; 2434-fifth surface; 100-battery; 200-controller; 300-motor; 1000-vehicle.

### Detailed Description

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the phrase "plurality of" refers to more than two (including two).

In the present application, the battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like, which is not limited in embodiments of the present application. The battery cell may be in a cylindrical shape, a flat shape, a cuboid shape or another shape, which is not limited in the embodiments of the present application either. The battery cells are generally classified into three types depending on the way of encapsulation: cylindrical battery cells, prismatic battery cells and pouch battery cells, which are also not limited in the embodiments of the present application.

The battery mentioned in the embodiments of the present application refers to a single physical module including one or more battery cells to provide a higher voltage and capacity. For example, the battery mentioned in the present application may include a battery module, a battery pack, or the like. The battery generally includes a box for packaging one or more battery cells. The box body can prevent liquid or other foreign matters from affecting charging or discharging of the battery cell.

The battery cell comprises an electrode assembly and an electrolyte solution, and the electrode assembly comprises a positive electrode plate, a negative electrode plate, and a separator. The battery cell works mainly relying on movement of metal ions between the positive electrode plate and the negative electrode plate. The positive electrode plate includes a positive electrode current collector and a positive electrode active material layer, a surface of the positive electrode current collector is coated with the positive electrode active material layer, the positive electrode current collector not coated with the positive electrode active material layer protrudes from the positive electrode current collector already coated with the positive electrode active material layer, and the positive electrode current collector not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative tab. The material of the negative electrode current collector may be copper, and the negative electrode active material may be, e.g., carbon or silicon. In order to ensure that no fusing occurs when a large current passes, there are a plurality of positive tabs which are stacked together, and there are a plurality of negative tabs which are stacked together. The material of the separator may be, e.g., polypropylene (PP) or polyethylene (PE). In addition, the electrode assembly may have a winded structure or a stacked structure, but the embodiments of the present application are not limited thereto.

At present, from the development of market situation, the application of batteries is becoming more and more extensive. Batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of the batteries, the market demand is also constantly expanding.

For the development of battery technologies, various design factors should be considered, such as cycle life, discharge capacity, charging-discharging rate, and other performance parameters. In addition, energy density of the batteries should also be considered. However, at present, battery cells have low energy density.

The inventors found through research that the electrode plate comprises a current collector and an active material layer arranged on a surface of the current collector. A part of the current collector without arrangement of the active material layer is a tab portion configured to mold a tab. Since there is a height difference between the active material layer and the tab portion, stress will be concentrated at an interface between the active material layer and the tab portion during rolling, so that the active material layer falls off, and cracks arise on the current collector. In order to relieve the stress, thickness at one end of the active material layer close to the tab portion generally will be reduced, thereby forming a thinned region with a small thickness.

However, in the electrode assembly, there is a large gap between the thinned region and the separator, which is not conducive to capillary effect functioning, so that the thinned region can hardly be infiltrated, there is a small amount of electrolyte solution or no electrolyte solution in the thinned region, and the thinned region cannot function (the thinned region cannot contribute to an electrochemical reaction). Specifically, when the thinned region of the positive electrode plate cannot function, the energy density of the battery cell is reduced. When the thinned region of the negative electrode plate cannot function, lithium plating will occur. Lithium plating will affect the performance of the battery cell, and reduce the energy density of the battery cell. As a result, the battery cell has low energy density.

In view of this, an embodiment of the present application provides an electrode plate, comprising a current collector, an active material layer, and a functional layer. The active material layer is provided on a surface of the current collector. The active material layer comprises a main body region and a thinned region, the thinned region is arranged at one end of the main body region along a first direction, and thickness of the main body region is larger than thickness of the thinned region. Along the first direction, the current collector has a tab portion extending beyond the thinned region in a direction away from the main body region. The functional layer is arranged on a surface of the thinned region facing away from the current collector, and the functional layer is configured to allow an electrolyte solution to pass through.

The electrode plate is provided with the functional layer that allows the electrolyte solution to pass through on the thinned region of the active material layer, such that after the electrode plate is winded or stacked to form an electrode assembly, there is a small gap between the functional layer and the separator, which is conducive to capillary effect functioning, enables the electrolyte solution to quickly infiltrate the thinned region through the functional layer, enables the thinned region to function, and is conductive to improving the energy density of the battery cell.

In addition, the small gap provides a short path for lithium ion transmission, which can reduce the risk of lithium plating and improve the performance of the battery cell.

The technical solutions described in the embodiments of the present application are adapted to a battery and an electrical device using a battery.

The electrical device may be a vehicle, a mobile phone, a portable device, a laptop, a ship, a spacecraft, an electric toy, an electric tool, etc. The spacecraft includes an airplane, a rocket, a space shuttle, or a spaceship. The electric toy includes a fixed or mobile electric toy, such as a game console, an electric vehicle toy, an electric ship toy, and an electric airplane toy. The electric tool includes an electric tool for metal cutting, an electric tool for grinding, an electric tool for assembling and an electric tool for railways, such as an electric drill, an electric grinder, an electric wrench, an electric screwdriver, an electric hammer, an electric impact drill, a concrete vibrator, and an electric planer. The electrical device is not specially limited in the embodiments of the present application.

For the convenience of illustration, the following embodiments are illustrated with the electrical device being a vehicle 1000 as an example.

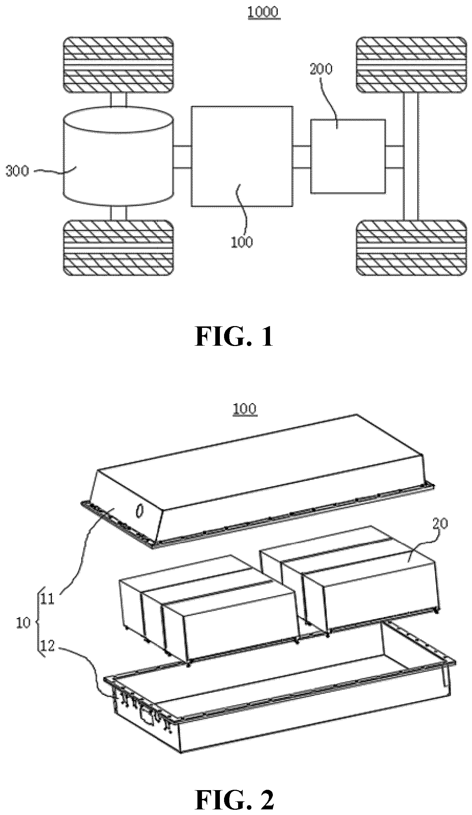

Referring to FIG. 1, FIG. 1 is a schematic structural diagram of a vehicle 1000 provided in some embodiments of the present application. The vehicle 1000 may be a fuel vehicle, a gas vehicle or a new energy vehicle. The new energy vehicle may be an all-electric vehicle, a hybrid vehicle, an extended-range vehicle, or the like. A battery 100 is arranged in the vehicle 1000. The battery 100 may be arranged at the bottom or head portion or tail portion of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

Referring to FIG. 2, FIG. 2 is an exploded view of a battery 100 provided in some embodiments of the present application. The battery 100 comprises a box body 10 and a battery cell 20, wherein the battery cell 20 is accommodated within the box body 10. The box body 10 is used to provide an accommodating space for the battery cell 20, and the box body 10 can be of various structures. In some embodiments, the box body 10 may include a first part 11 and a second part 12, the first part 11 and the second part 12 covering each other, and the first part 11 and the second part 12 together defining the accommodating space for accommodating the battery cell 20. The second part 12 may be of a hollow structure with an opening at one end, and the first part 11 may be of a plate-like structure, where the first part 11 covers the opening side of the second part 12 so that the first part 11 and the second part 12 together define the accommodation space. The first part 11 and the second part 12 may each be of a hollow structure with an opening at one end, where the opening side of the first part 11 covers the opening side of the second part 12. Of course, the box body 10 formed by the first part 11 and the second part 12 may be of a variety of shapes, such as a cylinder and a rectangular solid.

In the battery 100, there may be a plurality of battery cells 20, and the plurality of battery cells 20 may be connected in series or in parallel or in parallel-series, where the parallel-series connection means that the plurality of battery cells 20 are connected in both series and parallel. The plurality of battery cells 20 may be directly connected together in series or in parallel or in parallel-series, and then the whole composed of the plurality of battery cells 20 may be accommodated in the box body 10. Of course, the battery 100 may also be in the form of a battery module first formed by the plurality of battery cells 20 being connected in series or in parallel or in parallel-series, then the plurality of battery modules may be connected in series or in parallel or in parallel-series to form a whole, and accommodated in the box body 10. The battery 100 may further include other structures. For example, the battery 100 may further include a bus component for electrically connecting the plurality of battery cells 20.

Each battery cell 20 may be a secondary battery cell or a primary battery cell; or may be a lithium-sulfur battery cell, a sodium-ion battery cell or a magnesium-ion battery cell, but is not limited thereto. The battery cell 20 may be in the shape of a cylinder, a flat body, a cuboid or others.

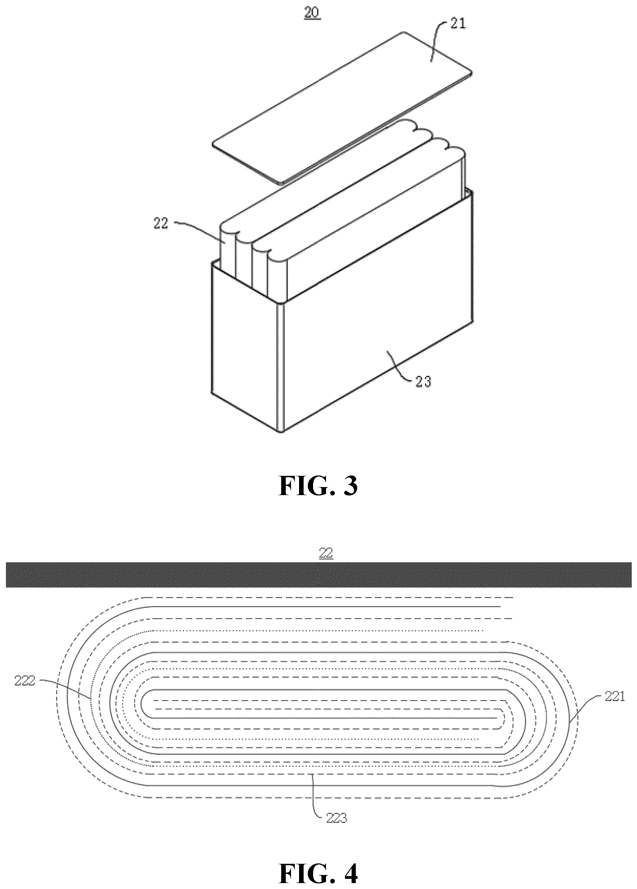

Referring to FIG. 3, FIG. 3 is an exploded view of a battery cell 20 provided in some embodiments of the present application. The battery cell 20 refers to a smallest unit constituting a battery 100. As shown in FIG. 3, the battery cell 20 comprises an end cover 21, an electrode assembly 22, a case 23, and other functional components.

The end cover 21 refers to a component that covers an opening of the case 23 to isolate an internal environment of the battery cell 20 from an external environment. Without limitation, the shape of the end cover 21 may be adapted to the shape of the housing 23 to match the housing 23. Optionally, the end cover 21 may be made of a material (such as an aluminum alloy) with a certain hardness and strength, so that the end cover 21 is not easy to be deformed when being pressed and collided, the battery cell 20 can have a higher structural strength, and the safety performance can also be improved. The end cover 21 may be provided with functional components such as electrode terminals (not shown). The electrode terminals may be used for electrical connection with the electrode assembly 22 for outputting or inputting electric energy of the battery cell 20. The end cover 21 may be made of various materials, such as copper, iron, aluminum, stainless steel, an aluminum alloy, and plastic. This is not specially limited in the embodiments of the present application. In some embodiments, an insulating member may be also provided on the inner side of the end cover 21. The insulating member may be configured to isolate an electrical connection component in the case 23 from the end cover 21 to reduce the risk of short circuit. As an example, the insulating member may be made of plastic, rubber or the like.

The case 23 is an assembly for matching the end cover 21 to form the internal environment of the battery cell 20. The formed internal environment may be used to accommodate the electrode assembly 22, an electrolytic solution and other components. The case 23 and the end cover 21 may be separate components, the housing 23 may be provided with an opening, and the internal environment of the battery cell 20 is formed by making the end cover 21 cover the opening at the opening. Without limitation, the end cover 21 and the case 23 may also be integrated with each other. Specifically, the end cover 21 and the case 23 may form a common connection face before other components are inserted into the housing. When the interior of the case 23 needs to be packaged, the end cover 21 then covers the case 23. The case 23 may have various shapes and sizes, such as a cuboid, a cylinder and a hexagonal prism. Specifically, the case 23 may be shaped according to the specific shape and size of the electrode assembly 22. The case 23 may be made of a variety of materials, such as copper, iron, aluminum, stainless steel, aluminum alloy, or plastic, which is not particularly limited in the embodiments of the present application.

Referring to FIG. 4, FIG. 4 is a schematic structural diagram of an electrode assembly 22 provided in some embodiments of the present application. The electrode assembly 22 is a component in the battery cell 20 where an electrochemical reaction occurs. The case 23 may comprise one or more electrode assemblies 22 therein. The electrode assembly 22 is mainly formed by winding or stacking a positive electrode plate 222 and a negative electrode plate 221, and a separator 223 is generally provided between the positive electrode plate 222 and the negative electrode plate 221. Parts of the positive electrode plate 222 and the negative electrode plate 221 having an active material constitute a main body part of the electrode assembly 22, and parts of the positive electrode plate 222 and the negative electrode plate 221 having no active material each form a tab. The positive tab and the negative tab may be located at one end of the main body part together or located at each end of the main body part respectively. During charging and discharging of the battery 100, the positive electrode active material and the negative electrode active material react with the electrolyte solution, and the tab is connected to an electrode terminal to form a current circuit.

Referring to FIGS. 3, 4, and 5, FIG. 5 is a schematic structural diagram of an electrode plate 24 provided in some embodiments of the present application. An embodiment of the present application provides an electrode plate 24. The electrode plate 24 comprises a current collector 241, an active material layer 242, and a functional layer 243. The active material layer 242 is arranged on a surface of the current collector 241. The active material layer 242 comprises a main body region 2421 and a thinned region 2422, the thinned region 2422 is arranged at one end of the main body region 2421 along a first direction, and thickness of the main body region 2421 is larger than thickness of the thinned region 2422. Along the first direction, the current collector 241 has a tab portion 2411 extending beyond the thinned region 2422 in a direction away from the main body region 2421. The functional layer 243 is arranged on a surface of the thinned region 2422 facing away from the current collector 241, and the functional layer 243 is configured to allow an electrolyte solution to pass through.

The electrode plate 24 may serve as a negative electrode plate 221 of the electrode assembly 22, or may serve as a positive electrode plate 222 of the electrode assembly 22. In the electrode assembly 22, the electrode plate 24 may merely serve as the negative electrode plate 221, or the electrode plate 24 may merely serve as the positive electrode plate 222, or the electrode plate 24 may serve as both the negative electrode plate 221 and the positive electrode plate 222.

The main body region 2421 is a main part of the active material layer 242, and implements main functions of the active material layer 242. The thinned region 2422 is a thinned part of the active material layer 242 facing one end of the tab portion 2411. The thinned region 2422 is located at one end of the main body region 2421 along the first direction.

"The thickness of the main body region 2421 larger than the thickness of the thinned region 2422" means that minimum thickness of the main body region 2421 is larger than maximum thickness of the thinned region 2422. In other words, thickness at any position of the main body region 2421 is larger than thickness at any position of the thinned region 2422.

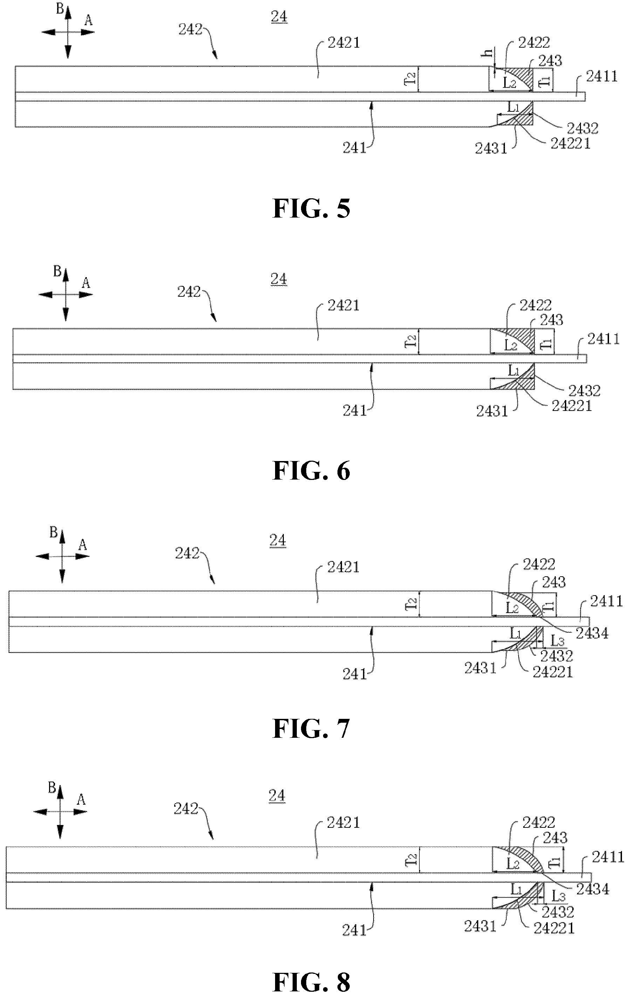

Referring to FIG. 5, the first direction may be direction A shown in FIG. 5. The thickness direction may be direction B shown in FIG. 5.

The tab portion 2411 is a part of the current collector 241 without arrangement of the active material layer 242. The tab portion 2411 is configured to mold the tab. The part of the current collector 241 with arrangement of the active material layer 242 and the tab portion 2411 are arranged along the first direction.

The functional layer 243 has a gap that allows the electrolyte solution to pass through. The functional layer 243 may be a ceramic layer, a polymer layer, or other condensed matter layers that allow the electrolyte solution to pass through.

The electrode plate 24 is provided with the functional layer 243 that allows the electrolyte solution to pass through on the thinned region 2422 of the active material layer 242, such that after the electrode plate 24 is winded or stacked to form the electrode assembly 22, there is a small gap between the functional layer 243 and the separator 223, which is conducive to the capillary effect functioning, enables the electrolyte solution to quickly infiltrate the thinned region 2422 through the functional layer 243, enables the thinned region 2422 to function, and is conductive to improving the energy density of the battery cell 20.

**In** addition, the small gap provides a short path for lithium ion transmission, which can reduce the risk of lithium plating and improve the performance of the battery cell 20.

**In** some embodiments, the functional layer 243 has a stronger ability to store the electrolyte solution than the active material layer 242.

The ability to store the electrolyte solution can be measured by testing the infiltration time. The faster the infiltration speed is, the stronger the ability to store the electrolyte solution is. In addition, it may also be measured by testing the volatilization time. The slower the volatilization speed is, the stronger the ability to store the electrolyte solution is.

The ability of the functional layer 243 to store the electrolyte solution is stronger than the ability of the active material layer 242 to store the electrolyte solution. In this way, during infiltration, the electrolyte solution can quickly flow through the functional layer 243 to the thinned region 2422, and after the infiltration is complete, it is more difficult to volatilize the electrolyte solution in the functional layer 243.

Moreover, the electrolyte solution can be stored in the functional layer 243, so that lithium ions can enter the separator 223 or the thinned region 2422 through the electrolyte solution stored in the functional layer 243.

The functional layer 243 has the stronger ability to store the electrolyte solution than the active material layer 242, so that the electrolyte solution tend to be stored in the functional layer 243, and the lithium ions can enter the separator 223 or the thinned region 2422 through the electrolyte solution stored in the functional layer 243, which can reduce the risk of lithium plating and improve the energy density of the battery cell 20.

**In** some embodiments, the functional layer 243 comprises at least one of vinylidene fluoride polymer, hexafluoropropylene polymer, vinylidene fluoride-hexafluoropropylene polymer, polyacrylic acid, polystyrene-butadiene copolymer, polyvinyl alcohol, polyalkenoate, polyurethane, chlorinated rubber, and epoxy resin.

The vinylidene fluoride polymer, hexafluoropropylene polymer, vinylidene fluoride-hexafluoropropylene polymer, polyacrylic acid, polystyrene-butadiene copolymer, polyvinyl alcohol, polyalkenoate, polyurethane, chlorinated rubber, and epoxy resin all have good ability to store the electrolyte solution. **In** particular, the vinylidene fluoride polymer, hexafluoropropylene polymer, and vinylidene fluoride-hexafluoropropylene polymer not only have strong ability to store the electrolyte solution, but also can be easily manufactured.

**In** some embodiments, the functional layer 243 further comprises a conductive agent.

The conductive agent can improve the conductive effects of the functional layer 243. Since the main material of the functional layer 243 is polymer with poor conductivity or without conductivity, the conductive agent is added to enhance the conductivity of the functional layer 243, to contribute to the passage of the lithium ions.

The conductive agent is added to the functional layer 243, to enhance the conductivity of the functional layer 243, so that it is easy to transport the lithium ions.

**In** some embodiments, the conductive agent includes at least one of acetylene black, active carbon, carbon black, conductive graphite, and carbon nanotubes.

The acetylene black, active carbon, carbon black, conductive graphite, and carbon nanotubes have good conductive effects, particularly acetylene black, which not only has good conductive effects but also is inexpensive.

In some embodiments, the electrode plate 24 is the negative electrode plate 221. The functional layer 243 comprises an active material, and powder particles with particle size larger than D₁ account for 50% of volume distribution of the active material in the functional layer 243. Powder particles with particle size larger than D₂ account for 50% of volume distribution of an active material in the active material layer 242, satisfying: 1≤D₂/D₁≤25.

D₁ represents that the powder particles with the particle size larger than D₁ account for 50% of the volume distribution of the active material in the functional layer 243. That is to say, 50% of the powder particles in the volume distribution of the active material in the functional layer 243 have particle size larger than D₁.

D₂ represents that powder particles with particle size larger than D₂ account for 50% of volume distribution of the active material in the active material layer 242. That is to say, 50% of the powder particles in the volume distribution of the active material in the active material layer 242 have particle size larger than D₂.

The value of D₂/D₁ may be, e.g., D₂/D₁=1, 2, 3, 4, 5, 6, 7, 8, 9, 10, 11, 12, 13, 14, 15, 16, 17, 18, 19, 20, 21, 22, 23, 24, or 25.

When D₂/D₁=1, the active material in the functional layer 243 may be same as the active material in the active material layer 242, such that not only can the functional layer 243 be conductive to the capillary effect functioning, enable the electrolyte solution to quickly infiltrate the thinned region 2422 through the functional layer 243, and enable the thinned region 2422 to function, but also the functional layer 243 can function similarly to the active material layer 242, which is conductive to improving the energy density of the battery cell 20. When 1<D₂/D₁≤25, the particle size of the powder particles of the active material in the functional layer 243 is smaller than the particle size of the powder particles of the active material in the active material layer 242, such that particles in the functional layer 243 are smaller than particles in the thinned region 2422, and the electrolyte solution in the thinned region 2422 can hardly be discharged. Therefore, the functional layer 243 can have good liquid retention effects on the thinned region 2422, so that the thinned region 2422 can function, which is conductive to improving the energy density of the battery cell 20. In addition, the particles in the functional layer 243 are smaller than the particles in the thinned region 2422, and will have better kinematic performance, so that the functional layer in this region has a higher lithium plating window, thereby reducing the risk of lithium plating, and contributing to ensuring the performance of the battery cell 20.

In some embodiments, 1.01≤D₂/D₁≤5.

The value of D₁/D₂ may be, e.g., D₂/D₁=1.01, 1.05, 1.2, 1.5, 1.8, 2, 2.2, 2.5, 2.8, 3, 3.2, 3.5, 3.8, 4, 4.2, 4.5, 4.8, or 5.

When 1.01≤D₁/D₂≤5, the functional layer 243 has good liquid retention capacity, better kinematic performance, and a higher lithium plating window, so that lithium plating is less likely to occur, which is conducive to ensuring the performance of the battery cell 20.

In some embodiments, the electrode plate 24 is the positive electrode plate 222. The functional layer 243 comprises an active material, and powder particles with particle size larger than D₁ account for 50% of volume distribution of the active material in the functional layer 243. Powder particles with particle size larger than D₂ account for 50% of volume distribution of an active material in the active material layer 242, satisfying: 1≤D₂/D₁≤30.

The value of D₁/D₂ may be, e.g., D₁/D₂=1, 2, 3, 4, 5, 6, 7, 8, 9, 10, 11, 12, 13, 14, 15, 16, 17, 18, 19, 20, 21, 22, 23, 24, 25, 26, 27, 28, 29, or 30.

When D₁/D₂=1, the active material in the functional layer 243 may be same as the active material in the active material layer 242, such that not only can the functional layer 243 be conductive to the capillary effect functioning, enable the electrolyte solution to quickly infiltrate the thinned region 2422 through the functional layer 243, and enable the thinned region 2422 to function, but also the functional layer 243 itself can function similarly to the active material layer 242, which is conductive to improving the energy density of the battery cell 20. When 1<D₁/D₂≤30, the particle size of the powder particles of the active material in the functional layer 243 is larger than the particle size of the powder particles of the active material in the active material layer 242, such that the particles in the functional layer 243 are larger than the particles in the thinned region 2422 and have greater resistance, thereby resulting in a slow release rate of lithium ions in the thinned region 2422, and reducing lithium ions to be intercalated in the negative electrode plate 221 per unit time, so that lithium plating is less likely to occur, which is conductive to ensuring the performance of the battery cell 20.

In some embodiments, 1.01≤D₁/D₂≤10.

The value of D₁/D₂ may be, e.g., D₁/D₂=1.01, 1.05, 1.2, 1.5, 1.8, 2, 2.2, 2.5, 2.8, 3, 3.2, 3.5, 3.8, 4, 4.2, 4.5, 4.8, 5, 5.2, 5.5, 5.8, 6, 6.5, 7, 7.5, 8, 8.5, 9, 9.5, or 10.

When 1.01≤D₁/D₂≤10, not only can the effect of difficult lithium plating be achieved, but also the release rate of the lithium ions will not be too slow, which is conducive to ensuring the discharge efficiency.

In some embodiments, the electrode plate 24 is the negative electrode plate 221. The functional layer 243 comprises an active material, and gram capacity of the active material in the functional layer 243 is M₁. Gram capacity of an active material in the active material layer 242 is M₂, satisfying: 1.01≤M₁/M₂≤5.

Gram capacity refers to a ratio of capacitance that can be released from the active material to mass of the active material.

M₁ represents the gram capacity of the active material in the functional layer 243.

M₂ represents the gram capacity of the active material in the active material layer 242.

M₁/M₂ represents a ratio of the gram capacity of the active material in the functional layer 243 to the gram capacity of the active material in the active material layer 242.

The value of the ratio of the gram capacity of the active material in the functional layer 243 to the gram capacity of the active material in the active material layer 242 may be, e.g., M₁/M₂=1.01, 1.05, 1.2, 1.5, 1.8, 2, 2.2, 2.5, 2.8, 3, 3.2, 3.5, 3.8, 4, 4.2, 4.5, 4.8, or 5.

When 1.01≤M₁/M₂≤5, the gram capacity of the active material in the functional layer 243 is larger than the gram capacity of the active material in the active material layer 242, thereby improving CB (Cell balance, equal to unit active capacity of the negative electrode plate 221 divided by unit active capacity of the positive electrode plate 222) value of the electrode plate 24 in a region where the functional region is located, and increasing space of the negative electrode plate 221 for intercalation of lithium ions, so that lithium plating does not tend to occur, which is conductive to ensuring the performance of the battery cell 20.

In some embodiments, 1.01≤M₁/M₂≤1.3.

The value of the ratio of the gram capacity of the active material in the functional layer 243 to the gram capacity of the active material in the active material layer 242 may be, e.g., M₁/M₂=1.01, 1.05, 1.08, 1.1, 1.12, 1.15, 1.18, 1.2, 1.22, 1.25, 1.28, or 1.3.

1.01≤M₁/M₂≤1.3 not only can increase the space of the negative electrode plate 221 for intercalation of lithium ions, so that lithium plating does not tend to occur, but also will not enable the CB value to be too large, which will substantially increase the costs.

In some embodiments, the electrode plate 24 is a positive electrode plate 222, the functional layer 243 comprises an active material, gram capacity of the active material in the functional layer 243 is M₁, and gram capacity of an active material in the main body region 2421 is M₂, satisfying: 0.3≤M₁/M₂≤1.01.

The value of the ratio of the gram capacity of the active material in the functional layer 243 to the gram capacity of the active material in the active material layer 242 may be, e.g., M₁/M₂=0.3, 0.35, 0.4, 0.45, 0.5, 0.55, 0.6, 0.65, 0.7, 0.75, 0.8, 0.85, 0.9, 0.95, 1, or 1.01.

When 0.3≤M₁/M₂<1, the gram capacity of the active material in the functional layer 243 is smaller than the gram capacity of the active material in the active material layer 242, thereby improving the CB value of the electrode plate 24 in the region where the functional region is located, so that a few lithium ions can be released from the positive electrode plate 222, and lithium plating does not tend to occur, which is conducive to ensuring the performance of the battery cell 20. When 1≤M₁/M₂≤1.01, the gram capacity of the active material in the functional layer 243 is equal to or slightly larger than the gram capacity of the active material in the active material layer 242, such that not only can the functional layer 243 be conductive to the capillary effect functioning, enable the electrolyte solution to quickly infiltrate the thinned region 2422 through the functional layer 243, and enable the thinned region 2422 to function, but also the functional layer 243 itself can function similarly to the active material layer 242, which is conductive to improving the energy density of the battery cell 20.

In some embodiments, 0.5≤M₁/M₂≤1.01.

The value of the ratio of the gram capacity of the active material in the functional layer 243 to the gram capacity of the active material in the active material layer 242 may be, e.g., M₁/M₂=0.5, 0.52, 0.55, 0.58, 0.6, 0.62, 0.65, 0.68, 0.7, 0.72, 0.75, 0.78, 0.8, 0.82, 0.85, 0.88, 0.9, 0.92, 0.95, 0.98, 1, or 1.01.

When 0.5≤M₁/M₂≤1.01, the gram capacity of the active material in the functional layer 243 is relatively large, and the functional layer 243 itself can also function similarly to the active material layer 242, which is conductive to improving the energy density of the battery cell 20.

Referring to FIG. 5, in some embodiments, along a thickness direction of the current collector 241, minimum thickness of the functional layer 243 is h, satisfying: 1 µm≤h≤80 µm.

The minimum thickness of the functional layer 243 refers to thickness at a thinnest position of the functional layer 243. Referring to FIG. 5, along the first direction, one end of the functional layer 243 in a direction from the thinned region 2422 to the main body region 2421 is its thinnest position, and the minimum thickness of the functional layer 243 is also the thickness at the thinnest position.

Along the thickness direction of the current collector 241, the value of the minimum thickness of the functional layer 243 may be, e.g., h=1 µm, 5 µm, 10 µm, 15 µm, 20 µm, 25 µm, 30 µm, 35 µm, 40 µm, 50 µm, 60 µm, 70 µm, or 80 µm.

The minimum thickness of the functional layer 243 is limited to 1-80 µm, such that after the electrode plate 24 is winded or stacked to form the electrode assembly 22, there is a small gap between the functional layer 243 and the separator 223, which is conducive to the capillary effect functioning, and enables the electrode plate 24 not to be too thick, so that the battery cell 20 has high energy density. If h<1 µm, the functional layer 243 has a small minimum thickness, which does not significantly improve the capillary effects. If h>80 µm, the functional layer 243 has a large minimum thickness, which means that the overall functional layer 243 is thick, enables the electrode plate 24 to be thick, and may reduce the energy density of the battery cell 20.

Referring to FIG. 5, in some embodiments, length of the functional layer 243 in the first direction is L₁, and length of the thinned region 2422 in the first direction is L₂, satisfying: 0.8≤L₁/L₂≤1.5.

The length of the functional layer 243 in the first direction refers to a distance between two ends of the functional layer 243 along the first direction.

The length of the thinned region 2422 in the first direction refers to a distance between two ends of the thinned region 2422 along the first direction.

The L₁/L₂ refers to a ratio of the length of the functional layer 243 in the first direction to the length of the thinned region 2422 in the first direction. The value of the ratio of the length of the functional layer 243 in the first direction to the length of the thinned region 2422 in the first direction may be, e.g., L₁/L₂=0.8, 0.85, 0.9, 0.95, 1, 1.05, 1.1, 1.15, 1.2, 1.25, 1.3, 1.35, 1.4, 1.45, or 1.5.

The length of the functional layer 243 in the first direction is 0.8-1.5 times as much as the length of the thinned region 2422 in the first direction. In this way, the functional layer 243 can basically cover or completely cover the thinned region 2422 along the first direction, so that after the electrode plate 24 is winded or stacked to form the electrode assembly 22, there is a small gap between the functional layer 243 and the separator 223, which is conducive to the capillary effect functioning.

Referring to FIG. 5, in some embodiments, along the thickness direction of the current collector 241, the functional layer 243 has a first surface 2431 facing away from the current collector 241. A maximum distance between the first surface 2431 and the current collector 241 is T₁, and the thickness of the main body region 2421 is T₂, satisfying: 0.8≤T₁/T₂≤1.1.

The first surface 2431 is a surface of the functional layer 243 facing away from the current collector 241 along the thickness direction of the current collector 241.

The T1 represents the maximum distance between the first surface 2431 and the current collector 241, and may also be understood as a maximum value of a total thickness of the thinned region 2422 and the functional layer 243.

The T2 represents the thickness of the main body region 2421, and may also be understood as a distance from a surface of the main body region 2421 facing away from the current collector 241 to the current collector 241 along the thickness direction.

The T₁/T2 represents a ratio of the maximum distance between the first surface 2431 and the current collector 241 to the thickness of the main body region 2421. The value of the ratio of the maximum distance between the first surface 2431 and the current collector 241 to the thickness of the main body region 2421 may be, e.g., T₁/T₂=0.8, 0.82, 0.85, 0.87, 0.9, 0.92, 0.95, 0.97, 1, 1.02, 1.05, 1.07, or 1.1.

Along the thickness direction, the maximum distance between the first surface 2431 and the current collector 241 is 0.8-1.1 times as much as the thickness of the main body region 2421. In this way, the first surface 2431 is basically aligned to the surface of the main body region 2421 facing away from the current collector 241, which is conducive to the capillary effect functioning, and enables the electrode plate 24 not to be too thick, so that the battery cell 20 has high energy density. If T₁<0.8T₂, after the electrode plate 24 is winded or stacked to form the battery cell 20, there is a relatively large gap between the functional layer 243 and the separator 223, and the electrolyte solution infiltrates the thinned region 2422 at a relatively slow infiltration speed. If T₁>1.1T₂, along a direction from the current collector 241 to the active material layer 242, the functional layer 243 extends a large distance beyond the surface of the main body region 2421 facing away from the current collector 241, and after the electrode plate 24 is winded or stacked to form the battery cell 20, a gap between the main body region 2421 and the separator 223 increases, so that the infiltration speed of the main body region 2421 becomes slow. In addition, the space occupied by the electrode plate 24 increases, which further has the risk of reducing the energy density of the battery cell 20.

In some embodiments, 0.9≤T₁/T₂≤1.01.

The value of the ratio of the maximum distance between the first surface 2431 and the current collector 241 to the thickness of the main body region 2421 may be, e.g., T₁/T₂=0.9, 0.91, 0.92, 0.93, 0.94, 0.95, 0.96, 0.97, 0.98, 0.99, 1, or 1.01.

Along the thickness direction, the maximum distance between the first surface 2431 and the current collector 241 is 0.9-1.01 times as much as the thickness of the main body region 2421. In this way, the first surface 2431 is basically aligned to the surface of the main body region 2421 facing away from the current collector 241, both the main body region 2421 and the thinned region 2422 can be quickly infiltrated, and the electrode plate 24 will not be too thick, so that the battery cell 20 has high energy density.

Referring to FIG. 5, in some embodiments, the thinned region 2422 has a second surface 24221, and the functional layer 243 is arranged on the second surface 24221. Along a direction from the main body region 2421 to the thinned region 2422, a distance between the second surface 24221 and the current collector 241 in the thickness direction of the current collector 241 gradually decreases.

The wording "along the direction from the main body region 2421 to the thinned region 2422, the distance between the second surface 24221 and the current collector 241 in the thickness direction of the current collector 241 gradually decreases" may also be understood as that along the direction from the main body region 2421 to the thinned region 2422, the thickness of the thinned region 2422 gradually decreases.

The thickness of the thinned region 2422 along the direction from the main body region 2421 to the thinned region 2422 gradually decreases, which is conductive to reducing the stress at an interface between the active material layer 242 and the tab portion 2411.

Referring to FIG. 5, in some embodiments, the second surface 24221 is an arc surface.

The second surface 24221 is set as the arc surface, which is conductive to reducing stress concentration.

Referring to FIGS. 5, 6, 7, and 8, FIG. 6 is a schematic structural diagram of an electrode plate 24 provided in some other embodiments of the present application. FIG. 7 is a schematic structural diagram of an electrode plate 24 provided in still some other embodiments of the present application. FIG. 8 is a schematic structural diagram of an electrode plate 24 provided in yet some other embodiments of the present application. In some embodiments, the second surface 24221 intersects with the current collector 241 at a first edge. The functional layer 243 clads the first edge.

The first edge is formed by the intersection of the second surface 24221 and a surface of the current collector 241 with arrangement of the active material layer 242. The first edge may also be understood as an edge of the thinned region 2422 along the direction from the main body region 2421 to the thinned region 2422.

The functional layer 243 clads the first edge, which may also be understood as that the functional layer 243 covers the first edge.

The functional layer 243 clads the first edge, thereby reducing the risk that powder falls off in the thinned region 2422.

Referring to FIGS. 7 and 8, in some embodiments, the functional layer 243 covers a part of the tab portion 2411.

The functional layer 243 covers a part of the tab portion 2411, which may also be understood as that: a part of the functional layer 243 is arranged in the tab portion 2411.

The thinned region 2422 covers a part of the tab portion 2411, thereby reinforcing root portion of the tab portion 2411, and reducing the risk of deformation and wrinkles in the root portion of the tab.

Referring to FIGS. 7 and 8, in some embodiments, along the first direction, the functional layer 243 has a third surface 2432 facing away from the main body region 2421. The third surface 2432 intersects with the current collector 241 at a second edge, and a gap between the second edge and the first edge is L₃, satisfying: 0≤L₃≤5 mm.

The second edge is formed by the intersection of the third surface 2432 and a surface of the current collector 241 with arrangement of the active material layer 242.

The L₃ represents a distance between the second edge and the first edge along the first direction. The value of the distance between the second edge and the first edge along the first direction may be, e.g., L₃=0, 0.5 mm, 1 mm, 1.5 mm, 2 mm, 2.5 mm, 3 mm, 3.5 mm, 4 mm, 4.5 mm, or 5 mm.

Along the first direction, the gap between the second edge and the first edge is 0-5 mm, so that the functional layer 243 can have enough area for coating the tab portion 2411 and function to reinforce the root portion of the tab. Moreover, the functional layer 243 will not affect length of the tab. If L₃>5 mm, the functional layer 243 will have a large area for cladding the tab portion 2411, thereby affecting molding of the tab.

In some embodiments, 1 mm≤L₃≤2 mm.

The value of the distance between the second edge and the first edge along the first direction may be, e.g., L₃=1 mm, 1.1 mm, 1.2 mm, 1.3 mm, 1.4 mm, 1.5 mm, 1.6 mm, 1.7 mm, 1.8 mm, 1.9 mm, or 2 mm.

Along the first direction, the gap between the second edge and the first edge is 1-2 mm, so that the functional layer 243 not only can have good reinforcing effects on the tab portion 2411, but also does not tend to affect the molding of the tab. When 0≤L₃<1 mm, a range of the functional layer 243 covering the first edge is not large enough, thereby resulting in poor effect of reducing the powder falling off in the thinned region 2422. When 2<L₃≤5 mm, the functional layer 243 clads a large area of the tab portion 2411, thereby enhancing the production costs.

Further referring to FIG. 5, in some embodiments, the functional layer 243 has a first surface 2431, a third surface 2432, and a fourth surface. The fourth surface is in contact with the second surface 24221. The first surface 2431 is parallel or aligned to the surface of the main body region 2421 facing away from the current collector 241 along the thickness direction of the current collector 241. The first surface 2431 intersects with the fourth surface, the third surface 2432 connects the first surface 2431 to the fourth surface, and the third surface 2432 is perpendicular to the first surface 2431.

The functional layer 243 is arranged on the second surface 24221, and its fourth surface is in contact with the second surface 24221, so that the electrolyte solution infiltrates the thinned region 2422 after passing through the functional layer 243.

The first surface 2431 is a surface of the functional layer 243 facing away from the current collector 241 along the thickness direction. The first surface 2431 is parallel or aligned to the surface of the main body region 2421 facing away from the current collector 241 along the thickness direction of the current collector 241, so that width of the gap between the functional layer 243 and the separator 223 is consistent, which is more conducive to the capillary effect functioning.

Along the thickness direction, the third surface 2432 has a large length. In this way, after the electrode plate 24 is winded or stacked to form the electrode assembly 22, there is a small gap between the functional layer 243 and the separator 223, which is conducive to the capillary effect functioning, enables the electrolyte solution to quickly infiltrate the thinned region 2422 through the functional layer 243, enables the thinned region 2422 to function, and is conductive to improving the energy density of the battery cell 20.

Referring to FIG. 6, in some other embodiments, the first surface 2431 is aligned to the surface of the main body region 2421 facing away from the current collector 241 along the thickness direction of the current collector 241.

The first surface 2431 is aligned to the surface of the main body region 2421 facing away from the current collector 241 along the thickness direction. After the electrode plate 24 is winded or stacked to form the electrode assembly 22, width of the gap between the main body region 2421 and the separator 223 is equal to width of a gap between the first surface 2431 and the separator 223, thereby ensuring that the electrolyte solution quickly infiltrates the thinned region 2422 without increasing the thickness of the electrode plate 24, and greatly improving the energy density of the battery cell 20. This arrangement of the functional layer 243 has ideal effects.

Referring to FIG. 6, in some embodiments, the third surface 2432 intersects with the current collector 241.

The third surface 2432 intersects with the current collector 241, indicating that the functional layer 243 covers an edge of the thinned region 2422 in a direction from the main body region 2421 to the thinned region 2422, and has good liquid retention effects.

In some other embodiments, the third surface 2432 intersects with the second surface 24221. In this case, the functional layer 243 does not cover the edge of the thinned region 2422 in the direction from the main body region 2421 to the thinned region 2422, but can still allow the electrolyte solution to infiltrate most of the thinned region 2422, so that the thinned region 2422 can function, and improve the energy density of the battery cell 20.

Referring to FIG. 7, in still some other embodiments, the functional layer 243 has a first surface 2431, a third surface 2432, a fourth surface, and a fifth surface 2434. The fourth surface is in contact with the second surface 24221. The first surface 2431 is parallel or aligned to the surface of the main body region 2421 facing away from the current collector 241 along the thickness direction of the current collector 241. The fifth surface 2434 is in contact with the current collector 241, and the third surface 2432 connects the fifth surface 2434 to the first surface 2431. The fourth surface connects the first surface 2431 to the fifth surface 2434.

The fifth surface 2434 is in contact with the current collector 241, including the fifth surface 2434 being in contact with the tab portion 2411, such that the functional layer 243 can reinforce the root portion of the tab portion 2411, and reduce the risk of deformation and wrinkles in the root portion of the tab.

Since the functional layer 243 may be formed after drying a fluid, when the functional layer 243 is arranged in an ideal manner, the functional layer 243 may flow to form the above shape. In this case, the functional layer 243 also has good liquid retention effects, enables the thinned region 2422 to be quickly infiltrated, and enables the thinned region 2422 to function.

Referring to FIG. 8, in yet some other embodiments, the first surface 2431 is aligned to the surface of the main body region 2421 facing away from the current collector 241 along the thickness direction of the current collector 241.

The first surface 2431 is aligned to the surface of the main body region 2421 facing away from the current collector 241 along the thickness direction. After the electrode plate 24 is winded or stacked to form the electrode assembly 22, width of the gap between the main body region 2421 and the separator 223 is equal to width of a gap between the first surface 2431 and the separator 223, thereby ensuring that the electrolyte solution quickly infiltrates the thinned region 2422 without increasing the thickness of the electrode plate 24, and greatly improving the energy density of the battery cell 20.

Referring to FIGS. 7 and 8, in some embodiments, the third surface 2432 is an arc surface.

The third surface 2432 is set as the arc surface, which is conductive to reducing stress concentration.

In some other embodiments, the second surface 24221 may also be a waved arc surface, which is also conductive to reducing stress concentration.

In some embodiments, the active material layer 242 is arranged on each of two opposite surfaces along the thickness direction of the current collector 241, and the functional layer 243 is arranged in a thinned region 2422 of each of the active material layers 242.

The current collector 241 comprises two opposite surfaces arranged along the thickness direction, and the active material layer 242 is arranged on each of the two surfaces. Each active material layer 242 has the thinned region 2422, and the functional layer 243 is arranged on each thinned region 2422.

The active material layer 242 is arranged on either side of the current collector 241, and the functional layer 243 is arranged on the thinned region 2422 of each active material layer 242, so as to form the electrode assembly 22 by winding or stacking the electrode plate 24.

An embodiment of the present application further provides an electrode assembly 22. The electrode assembly 22 comprises the above electrode plate 24.

The electrode assembly 22 comprises a positive electrode plate 222, a negative electrode plate 221, and a separator 223. The positive electrode plate 222, the separator 223, and the negative electrode plate 221 are winded or stacked to form the electrode assembly 22. At least one of the positive electrode plate 222 and the negative electrode plate 221 is the above electrode plate 24.

An embodiment of the present application further provides a battery cell 20. The battery cell 20 comprises the above electrode assembly 22.

An embodiment of the present application further provides a battery 100. The battery 100 comprises the above battery cell 20.

An embodiment of the present application further provides an electrical device. The electrical device comprises the above battery 100. The battery 100 is configured to provide electrical energy for the electrical device.

According to some embodiments of the present application, referring to FIGS. 3 to 8.

an embodiment of the present application provides an electrode plate 24. The electrode plate 24 comprises a current collector 241, an active material layer 242, and a functional layer 243. The active material layer 242 is arranged on a surface of the current collector 241. The active material layer 242 comprises a main body region 2421 and a thinned region 2422, the thinned region 2422 is arranged at one end of the main body region 2421 along a first direction, and thickness of the main body region 2421 is larger than thickness of the thinned region 2422. Along the first direction, the current collector 241 has a tab portion 2411 extending beyond the thinned region 2422 in a direction away from the main body region 2421. The functional layer 243 is arranged on a surface of the thinned region 2422 facing away from the current collector 241, and the functional layer 243 is configured to allow an electrolyte solution to pass through. The electrode plate 24 is provided with the functional layer 243 that allows the electrolyte solution to pass through on the thinned region 2422 of the active material layer 242, such that after the electrode plate 24 is winded or stacked to form the electrode assembly 22, there is a small gap between the functional layer 243 and the separator 223, which is conducive to the capillary effect functioning, enables the electrolyte solution to quickly infiltrate the thinned region 2422 through the functional layer 243, enables the thinned region 2422 to function, and is conductive to improving the energy density of the battery cell 20. In addition, the small gap provides a short path for lithium ion transmission, which can reduce the risk of lithium plating and improve the performance of the battery cell 20.

The thinned region 2422 has a second surface 24221. The functional layer 243 is arranged on the second surface 24221, and along a direction from the main body region 2421 to the thinned region 2422, a distance between the second surface 24221 and the current collector 241 in the thickness direction of the current collector 241 gradually decreases. The second surface 24221 intersects with the current collector 241 at a first edge, and the functional layer 243 clads the first edge. The functional layer 243 clads the first edge, thereby reducing the risk that powder falls off in the thinned region 2422.

The functional layer 243 covers a part of the tab portion 2411. The thinned region 2422 covers a part of the tab portion 2411, thereby reinforcing root portion of the tab portion 2411, and reducing the risk of deformation and wrinkles in the root portion of the tab.

The above description merely provides preferred embodiments of the present application and is not intended to limit the present application. For those skilled in the art, the present application may have various modifications and alterations. Any modifications, equivalent substitutions, improvements, etc. made within the spirit and principles of the present application shall fall into the scope of protection of the present application.

## Claims

1. An electrode plate, comprising:
a current collector;
an active material layer provided on a surface of the current collector, wherein the active material layer comprises a main body region and a thinned region, the thinned region is arranged at one end of the main body region along a first direction, thickness of the main body region is larger than thickness of the thinned region, and along the first direction, the current collector has a tab portion extending beyond the thinned region in a direction away from the main body region; and
a functional layer provided on a surface of the thinned region facing away from the current collector and configured to allow an electrolyte solution to pass through.

2. The electrode plate according to claim 1, wherein the functional layer has a stronger ability to store the electrolyte solution than the active material layer.

3. The electrode plate according to claim 2, wherein the functional layer comprises at least one of vinylidene fluoride polymer, hexafluoropropylene polymer, vinylidene fluoride-hexafluoropropylene polymer, polyacrylic acid, polystyrene-butadiene copolymer, polyvinyl alcohol, polyalkenoate, polyurethane, chlorinated rubber, and epoxy resin.

4. The electrode plate according to claim 3, wherein the functional layer further comprises a conductive agent.

5. The electrode plate according to claim 4, wherein the conductive agent comprises at least one of acetylene black, active carbon, carbon black, conductive graphite, and carbon nanotubes.

6. The electrode plate according to claim 1, wherein the electrode plate is a negative electrode plate, the functional layer comprises an active material, powder particles with particle size larger than D₁ account for 50% of volume distribution of the active material in the functional layer, and powder particles with particle size larger than D₂ account for 50% of volume distribution of an active material in the active material layer, satisfying: 1≤D₂/D₁≤25.

7. The electrode plate according to claim 6, wherein 1.01≤D₂/D₁≤5.

8. The electrode plate according to claim 1, wherein the electrode plate is a positive electrode plate, the functional layer comprises an active material, powder particles with particle size larger than D₁ account for 50% of volume distribution of the active material in the functional layer, and powder particles with particle size larger than D₂ account for 50% of volume distribution of an active material in the active material layer, satisfying: 1≤D₂/D₁≤30.

9. The electrode plate according to claim 8, wherein 1.01≤D₁/D₂≤10.

10. The electrode plate according to claim 1, wherein the electrode plate is a negative electrode plate, the functional layer comprises an active material, gram capacity of the active material in the functional layer is M₁, and gram capacity of an active material in the active material layer is M₂, satisfying: 1.01≤M₁/M₂≤5.

11. The electrode plate according to claim 10, wherein 1.01≤M₁/M₂≤1.3.

12. The electrode plate according to claim 1, wherein the electrode plate is a positive electrode plate, the functional layer comprises an active material, gram capacity of the active material in the functional layer is M₁, and gram capacity of an active material in the active material layer is M₂, satisfying: 0.3≤M₁/M₂≤1.01.

13. The electrode plate according to claim 12, wherein 0.5≤M₁/M₂≤1.01.

14. The electrode plate according to any one of claims 1-13, wherein along a thickness direction of the current collector, minimum thickness of the functional layer is h, satisfying: 1 µm≤h≤80 µm.

15. The electrode plate according to any one of claims 1-14, wherein length of the functional layer in the first direction is L₁, and length of the thinned region in the first direction is L₂, satisfying: 0.8≤L₁/L₂≤1.5.

16. The electrode plate according to any one of claims 1-15, wherein along a thickness direction of the current collector, the functional layer has a first surface facing away from the current collector, a maximum distance between the first surface and the current collector is T₁, and thickness of the main body region is T₂, satisfying: 0.8≤T₁/T₂≤1.1.

17. The electrode plate according to claim 16, wherein 0.9≤T₁/T₂≤1.01.

18. The electrode plate according to any one of claims 1-17, wherein the thinned region has a second surface, the functional layer is arranged on the second surface, and a distance between the second surface and the current collector in a thickness direction of the current collector gradually decreases along a direction from the main body region to the thinned region.

19. The electrode plate according to claim 18, wherein the second surface is an arc surface.

20. The electrode plate according to claim 18 or 19, wherein the second surface intersects with the current collector at a first edge, and the functional layer clads the first edge.

21. The electrode plate according to claim 20, wherein the functional layer covers a part of the tab portion.

22. The electrode plate according to claim 20 or 21, wherein along the first direction, the functional layer has a third surface facing way from the main body region, the third surface intersects with the current collector at a second edge, and a gap between the second edge and the first edge is L₃, satisfying: 0≤L₃≤5 mm.

23. The electrode plate according to claim 22, wherein 1 mm≤L₃≤2 mm.

24. The electrode plate according to any one of claims 1-23, wherein the active material layer is arranged on each of two opposite surfaces along the thickness direction of the current collector, and the functional layer is arranged in a thinned region of each of the active material layers.

25. An electrode assembly, comprising the electrode plate according to any one of claims 1-24.

26. A battery cell, comprising the electrode assembly according to claim 25.

27. A battery, comprising the battery cell according to claim 26.

28. An electrical device, comprising the battery according to claim 27, the battery being configured to provide electrical energy for the electrical device.
